# EUROPEAN PATENT APPLICATION

(11) **EP 1 308 645 A1**
(43) Date of publication of application: **07.05.2003**
(21) Application number: 02257471.9
(22) Date of filing: 28.10.2002
(51) Int. Cl.: F16H 25/22, B64C 13/34

(54) **Ball screw actuator for an aircraft**

(30) Priority: 05.11.2001 GB 0126510
(71) Applicant: Goodrich Actuation Systems Ltd, Luton, Bedfordshire LU1 3LU (GB)
(72) Inventor: Darby, Jonathan Alan, Newcastle, Staffs ST5 4DJ (GB)
(74) Representative: Carpenter, David

(57) **Abstract**

A ball screw actuator for a control surface of an aircraft includes a rotatable input shaft (16) which is driven, in use, by a drive shaft (22) and which is coupled to a non-rotatably mounted output shaft (10). The input shaft (16) has a screw thread formation including a groove within which a plurality of spherical members (20) are received to provide a ball screw coupling between the input shaft (16) and the output shaft (10). The drive shaft (22) is arranged to impart a drive load to the input shaft (16) through an intermediate drive arrangement (23) including a carrier member (28) and a shear pin (30) which is coupled to the carrier member (28) and arranged to shear across a shear gap in the event that the drive load applied by the drive shaft (22) exceeds a predetermined amount, thereby to break the coupling between the drive shaft (22) and the input shaft (16). The shear pin (30) is coupled to the carrier member (28) such that the shear gap remains substantially constant throughout the actuator service life.

## Description

The invention relates to a screw actuator comprising a rotatable input shaft and a non rotatable output shaft, the input and output shafts cooperating with one another such that rotation of the input shaft causes the output shaft member to move axially relative to the input shaft. In particular, but not exclusively, the invention relates to a screw actuator for use in controlling flight control surfaces on an aircraft wing.

The flight control surfaces on an aircraft wing, such as the leading and trailing edge high lift surfaces, are commonly driven by means of ball screw actuators, with one actuator being arranged to drive a different end region of the surface. The ball screw actuator includes a rotatable input shaft, coupled to a drive shaft through a gear arrangement, which is arranged to impart relative axial movement to a non-rotatably mounted output shaft coupled to the flight surface. The input shaft is provided with a screw thread including a helical groove within which balls, carried by the output shaft, are in rolling engagement to provide a ball screw coupling between the input and output shafts. Upon rotation of the drive shaft, the input shaft is caused to rotate, thereby imparting axial movement to the output shaft which, in turn, drives the flight control surface.

It is desirable in such systems to ensure the load applied to the flight control surface by the actuators does not exceed a maximum desired amount. In particular, if the flight control surface becomes locked or jammed, it is necessary to ensure the actuators do not continue to apply a load to the surface which may cause damage to the flight control surface or another part of the aircraft frame. In order to limit the load which may be applied to the flight control surface by the ball screw actuator, it is known to provide the actuator with a shear pin arrangement. The rotary load applied by the drive shaft is transmitted to the input shaft of the ball screw actuator through a shear pin which is typically arranged to extend through respective recesses provided in the drive shaft and the input shaft, and which is caused to shear across a shear gap defined between respective parts of the shafts in the event that the drive load exceeds a predetermined, maximum amount. Shearing of the pin breaks the coupling between the drive shaft and the input shaft of the ball screw actuator and prevents any further loading of the flight control surface.

It is also desirable in such systems to ensure any external axial loading of the flight control surface beyond a predetermined maximum amount, which may occur for example as a result of aerodynamic effects, does not result in a reverse load being transmitted to the drive shaft through the input shaft. For this purpose it is known to provide the actuator with first and second brake arrangements. The first brake arrangement typically takes the form of a pawl and ratchet "no-back" device having first and second braking surfaces which are urged into frictional engagement to apply a braking load to the input shaft so as to prevent reverse rotary load being imparted to the input shaft in the event that an external compressive load in excess of a predetermined amount is applied to the flight control surface. The second brake arrangement is arranged to apply a braking load to the input shaft so as to prevent loading of the input shaft, in the event that an external tensile load in excess of a predetermined amount is applied to the flight control surface.

In existing systems of the aforementioned type it has been found that, as the braking surfaces of the no-back device become worn, a small amount of relative axial movement between the drive shaft and the input shaft of the ball screw actuator can occur causing the shear gap across which the shear pin extends to be increased. As a result, when the shear load applied to the pin exceeds the desired shear load, the pin may bend instead of fracturing cleanly.

Thus, the shear pin may become jammed which can prevent the pin shearing, in which case loads in excess of the predetermined maximum load may be applied to the flight control surface, increasing the risk of damage to the surface and/or to the aircraft frame.

It is an object of the present invention to provide a ball screw actuator in which the aforementioned problem is alleviated or avoided.

According to a first aspect of the present invention, there is provided a ball screw actuator for moving an aircraft control surface, the actuator comprising a rotatable input shaft which is driven, in use, by a drive shaft and which is coupled through a ball screw coupling to a non-rotatably mounted output shaft, the drive shaft being arranged to impart a drive load to the input shaft through an intermediate drive arrangement including a carrier member and a shear pin which is coupled to the carrier member and arranged to shear across a shear gap in the event that the drive load applied by the drive shaft exceeds a predetermined value, thereby to break the drive connection between the drive shaft and the input shaft.

As the load applied to the drive shaft is imparted to the input shaft through an intermediate drive arrangement, the invention provides the advantage that the shear pin can be coupled to the carrier member such that the shear gap remains substantially constant throughout the actuator service life, regardless of any wear which may occur in other parts of the actuator.

In a preferred embodiment, the intermediate drive arrangement further comprises an intermediate drive member in rotational, preferably splined connection with the input shaft, wherein the shear pin extends between respective recesses provided in the intermediate drive member and the carrier member to provide a drive load path from the drive shaft to the input shaft.

In a preferred embodiment, the actuator is provided with a first brake arrangement which is arranged to apply a braking load to the input shaft, to prevent rotary load being transmitted to the drive shaft, in response to an external axial compressive load being applied to the actuator from the control surface. Preferably, the first brake arrangement includes first and second braking surfaces which apply the braking load to the input shaft.

Preferably, the first brake arrangement includes a pawl and ratchet arrangement, commonly referred to as a "no-back" device.

The invention provides the advantage that, even in the event of wear of the first and second braking surfaces throughout the service life of the actuator, the size of the shear gap across which the shear pin shears remains substantially constant. Any risk of the shear pin becoming jammed or locked, which may otherwise prevent it from shearing under drive overload, is therefore substantially eliminated.

The actuator may further comprise a second brake arrangement which is arranged to apply a braking load to the input shaft, to prevent a rotary load being applied to the drive shaft, in response to an external axial tensile load being applied to the actuator by the control surface.

In a further preferred embodiment, the intermediate drive member is a drive ring and the carrier member, conveniently of part annular form, is received within a circumferential groove in the intermediate drive member.

Conveniently, the shear gap is defined between an internal radial surface of the circumferential groove provided in the intermediate drive member and a radial surface of the carrier member.

As the shear gap is defined by internal surfaces within the intermediate drive arrangement, the gap is not affected by wear caused to other parts of the actuator throughout its service life, for example wear of the braking surfaces of the first brake arrangement.

According to a second aspect of the present invention, there is provided a ball screw actuator for moving an aircraft control surface, the actuator comprising a rotatable input shaft which is driven, in use, by a drive shaft and which is coupled through a ball screw coupling to a non-rotatably mounted output shaft, the drive shaft being coupled to the input shaft through a intermediate drive arrangement including a shear pin which is arranged to shear across a shear gap in the event that the rotary load applied by the drive shaft exceeds a predetermined value, wherein the intermediate drive arrangement is unaffected by axial wear in adjacent components such that the shear gap remains substantially constant throughout actuator service life.

In a preferred embodiment, the intermediate drive arrangement also includes a carrier member received within a circumferential groove in an intermediate drive ring, wherein facing surfaces of the groove and the carrier member define the shear gap.

Desirably a blocking member occupies that region of the circumferential groove of the drive ring not occupied by the carrier member.

Preferably the carrier member has an axial spline connection with the drive shaft.

It will be appreciated that the aforementioned preferred features of the first aspect of the present invention may also be incorporated alone or in combination in the actuator of the second aspect of the invention.

The invention will now be described, by way of example only, with reference to the accompanying drawings in which;
Figure 1 is a sectional view of a part of an actuator in accordance with an embodiment of the present invention;
Figure 2 is an isometric view of an intermediate drive arrangement forming part of the actuator in Figure 1 when the actuator is in a normal operating condition; and
Figure 3 is an isometric view similar to that shown in Figure 2, but in circumstances in which a shear pin of the intermediate drive arrangement has been caused to shear under drive overload;
Figure 4 is a plan view of a brake arrangement forming part of the actuator in Figure 1;
Figure 5 is a view similar to Figure 1 of a modification; and
Figure 6 is a view similar to Figure 2 of the modification.

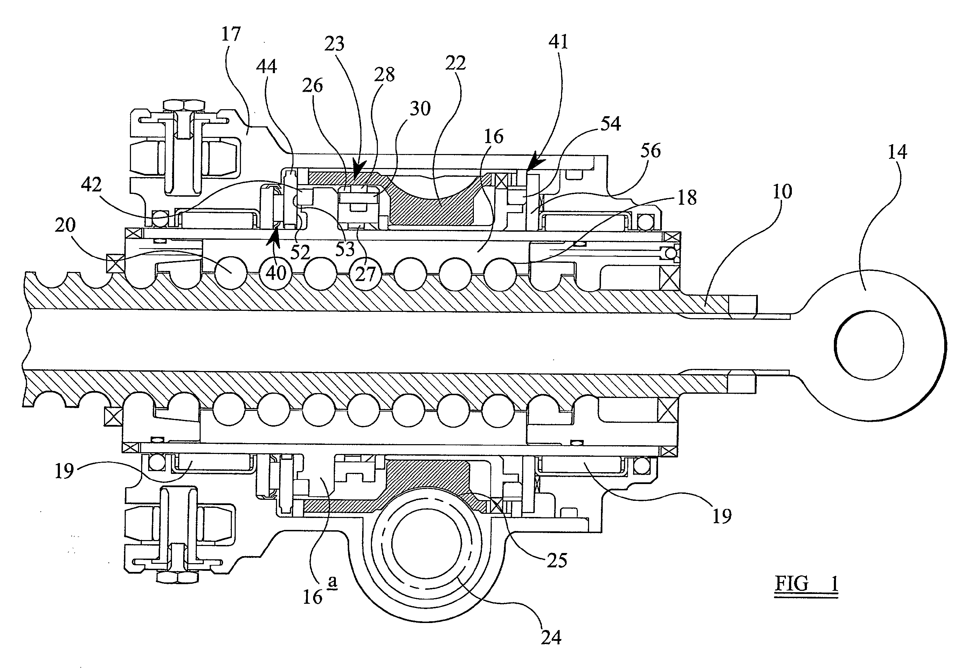

Referring to Figure 1, a ball screw actuator for moving a flight control surface of an aircraft wing, such as a leading or trailing edge high lift surface, includes an axially moveable, non-rotatably mounted output shaft 10, an output end of which is adapted to be coupled to an output element 14 for connection to an end region of the flight control surface (not shown). The output shaft 10 is received, in part, within an input member or shaft 16 of substantially cylindrical form housed within an actuator housing 17 and supported within the housing 17 by means of bearings 19. The input shaft 16 is provided with a screw thread formation 18 including a helical groove and the output shaft 10 carries a plurality of spherical members or balls 20 in rolling engagement in the helical groove so as to form a ball screw coupling between the input shaft 16 and the output shaft 10.

The input shaft 16 is driven by means of a drive shaft 22 which is rotatable, in use, under the influence of a motor (not shown) through a worm gear arrangement. The worm gear arrangement includes a worm gear drive shaft 24 (an end view of which is visible in Figure 1) which is arranged to drive the shaft 22 through a helical groove or thread coupling 25 with a high gear ratio. The drive shaft 22 is coupled to the input shaft 16 through an intermediate drive arrangement, referred to generally as 23, which is connected to the input shaft 16 of the ball screw coupling through a spline arrangement 27.

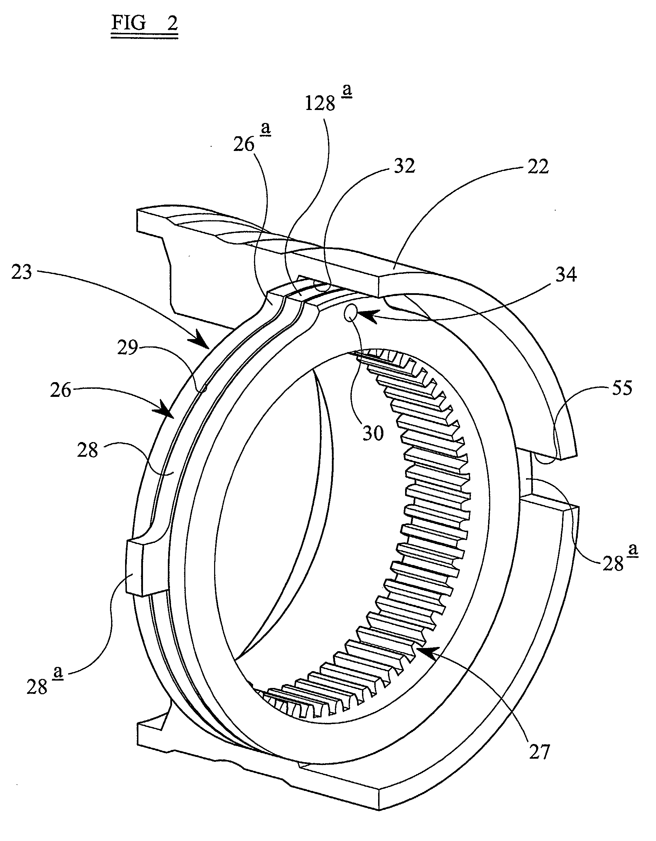

As can be seen more clearly in Figure 2, the intermediate drive arrangement 23 includes an intermediate drive member or ring 26 of substantially cylindrical form which extends through the drive shaft 22 and which is provided with a circumferential groove or recess 29. A carrier member 28 of part annular form is received within the circumferential groove 29. The drive ring 26 is provided with a radially outwardly extending lug 26a divided into two parallel spaced regions by the groove 29 and received within an enlarged annular region 32 provided in the internal circumferential surface of the drive shaft 22. The carrier member 28 is also provided with a radially outwardly extending lug 128a which, in the orientation shown in Figure 2, is angularly aligned between the parallel regions of the lug 26a of the drive ring 26. Diametrically opposed radial flange regions 28a extend from the carrier member 28 and are received within respective axial recesses 55 in the drive shaft 22 to provide a mechanical coupling transmitting rotation between the drive shaft 22 and the intermediate drive arrangement 23. An aperture 34 is formed through the lugs 26a, 128a of the drive ring 26 and the carrier member 28 respectively within which a shear pin member 30 is received, thereby to provide a rotational drive load path from the drive shaft 22 to the input shaft 16 through the drive ring 26, the carrier member 28 and the shear pin 30. In use, rotary movement of the worm gear drive shaft 24 imparts rotary movement of the drive shaft 22 which, in turn, imparts rotary movement to the input shaft 16 through the drive ring 26, the carrier member 28 and the shear pin 30. Rotary movement of the input shaft 16 serves to impart axial movement to the non-rotatably mounted output shaft 10 through the ball screw coupling.

As shown in Figure 1, the actuator also includes first and second brake arrangements, referred to generally as 40, 41 respectively, which are arranged to ensure any external loading of the flight control surface does not result in an excessive drive load being applied to the drive shaft 22. The first brake arrangement 40 takes the form of a "no-back" device, typically of the type described in US 3583248, which is arranged to reduce the effect of any loading by the flight control surface to the drive motor through the ball screw coupling.

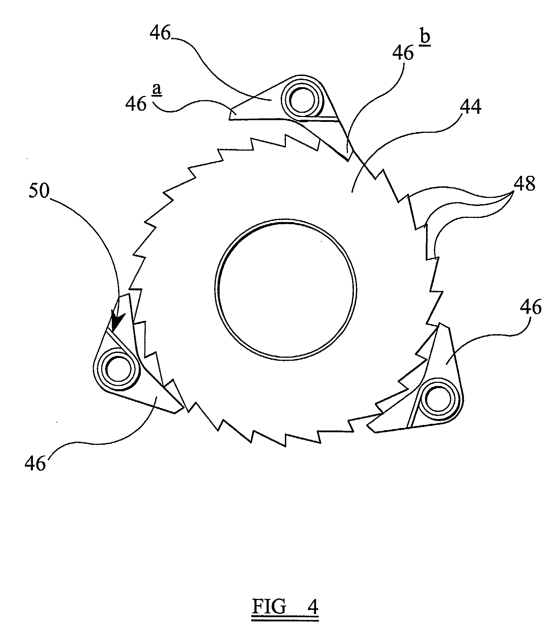

The first brake arrangement 40 includes a first brake element 42 which is carried by a flange 16a on the input shaft 16, and hence fixed for rotation with the input shaft 16, which extends laterally of the axis of the shaft 16. As can be seen more clearly in Figure 4, the first brake arrangement 40 also includes a rotary ratchet wheel 44 and a plurality of pawl members 46 (not shown in Figure 1), radially spaced around the outer circumferential surface of the wheel 44. The circumferential surface of the ratchet wheel 44 is provided with a plurality of ramp-like indentations defining ratchet teeth 48 which cooperate with arms 46a of the pawl members 46 to permit rotation of the ratchet wheel 44 in one direction (i.e. clockwise in Figure 4) but which prevent rotation of the wheel 44 in the opposite direction. The pawl members 46 are urged into engagement with the ramped surfaces of the ratchet wheel 44 by means of associated biasing springs 50.

In normal operating conditions, the load applied to the output shaft 10 will be compressive (that is, it will tend to move the output shaft 10 to the left as shown in Figure 1). In such normal operation, when the motor is being driven in a direction to extend the output shaft 10 (to the right in Figure 1), the second braking surface 53 of the ratchet wheel 44 rotates with the first braking surface 52 of the first brake element 42 such that the input shaft 16 is free to rotate.

When the motor is not driving the actuator, the effect of the compressive load on the output shaft 10 will be to try to turn the input shaft 16 in the retract direction. The ratchet wheel 44 defines a first braking surface 52 which cooperates with a second braking surface 53 defined by the first brake element 42 when rotation of the ratchet wheel 44 is prevented by operation of the pawls 46. Thus, the tendency of the drive shaft 22 to rotate under the compressive load applied to the output shaft 10 will be resisted by the first brake arrangement 40.

When the drive motor is being driven in a direction to retract the output shaft 10 (to the left in Figure 1), the force applied is sufficient to overcome the frictional resistance of the first brake arrangement 40 and allows the shaft 10 to be retracted. In the absence of the first brake arrangement 40, an external compressive load being applied to the output shaft 10 would cause the output shaft 10 to retract (i.e. movement to the left in Figure 1) and a rotary load would be transmitted back through the intermediate drive arrangement 23 to the drive shaft 22.

The second brake arrangement 41 includes a second brake element 54 and a brake plate 56 carried by the input shaft 16, the second brake element 54 and the brake plate 56 defining facing braking surfaces which are brought into frictional engagement in the event that an external tensile load (i.e. to extend the output shaft 10) is applied to the output shaft 10. Engagement between the frictional surfaces of the second brake element 54 and the brake plate 56 applies a braking load to be applied to the input shaft 16, thereby to resist rotation of the input shaft 16 through external tensile loading. In operating conditions in which no or only a limited external tensile load is applied to the output shaft 10, the second brake element 54 remains disengaged from the brake element 56 such that the input shaft 16 is free to rotate, if driven by the drive shaft 22.

The provision of first and second brake arrangements of the type described previously are known in ball screw actuators for flight control surfaces, and further details of their operation will be readily apparent from the aforementioned description and accompanying drawings.

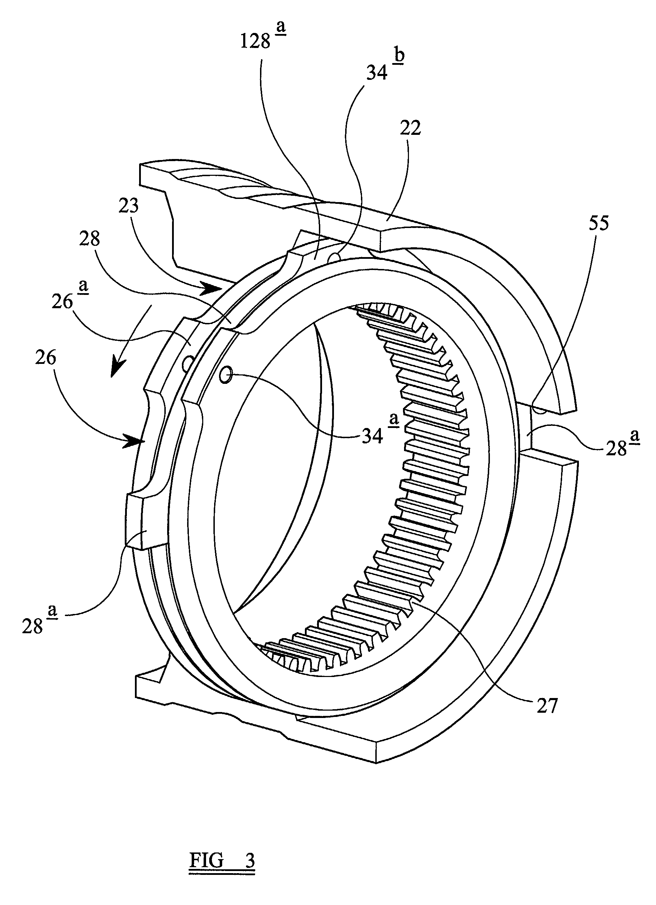

In use, when the actuator is in a normal mode of operation in which rotary drive is imparted to the input shaft 16 to cause axial movement of the output shaft 10, the intermediate drive arrangement 23 is in the position shown in Figure 2, in which the lugs 26a, 128a of the drive ring 26 and the carrier ring 28 respectively are radially aligned and are received within the drive shaft 22. In the event that the drive load exceeds a predetermined amount, beyond which damage may be caused to the flight control surface, the shear pin 30 through which the drive ring 26 is coupled to the carrier member 28 will be caused to shear across a shear gap defined by an internal surface of the circumferential groove 29 provided in the drive ring 26 and a facing, radial surface of the carrier member 28. In such circumstances, the coupling between the drive ring 26 and the carrier member 28 is broken such that any input rotary drive load applied by the drive shaft 22 to the carrier member 28 is no longer transmitted to the drive ring 26 and, hence, to the input shaft 16. When this occurs, the carrier member 28 and the drive shaft 22 will be free to move relative to the drive ring 26 and the input shaft 16 (for example, the position shown in Figure 3), as the breaking or disconnection of this mechanical coupling permits relative rotary movement between the drive ring 26 and the carrier member 28. It will be appreciated that, in the event that this occurs, an aperture 34a provided in the drive ring 26 and an aperture 34b provided in the carrier member 28, which are aligned to define the aperture 34 in the position shown in Figure 2, become misaligned.

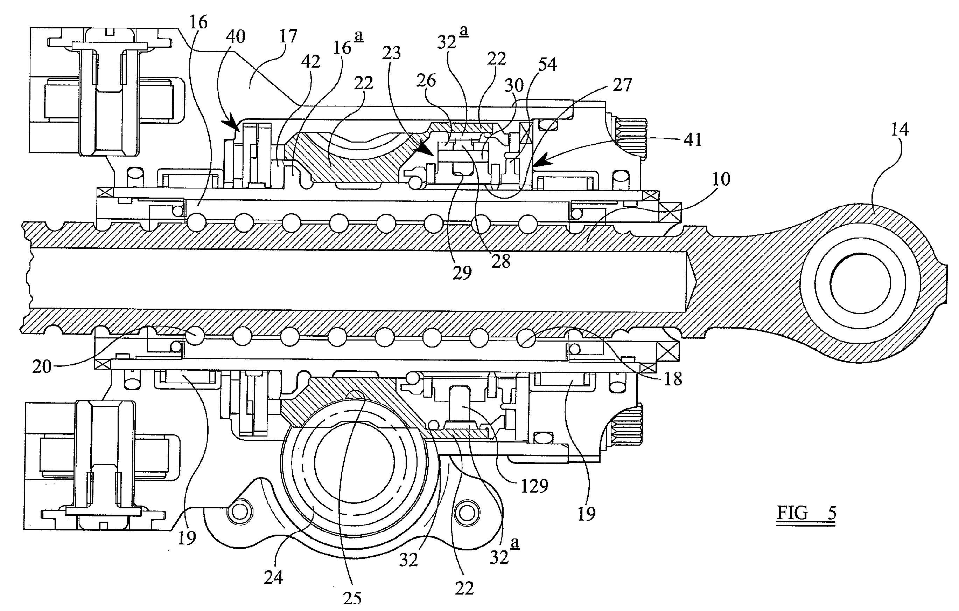

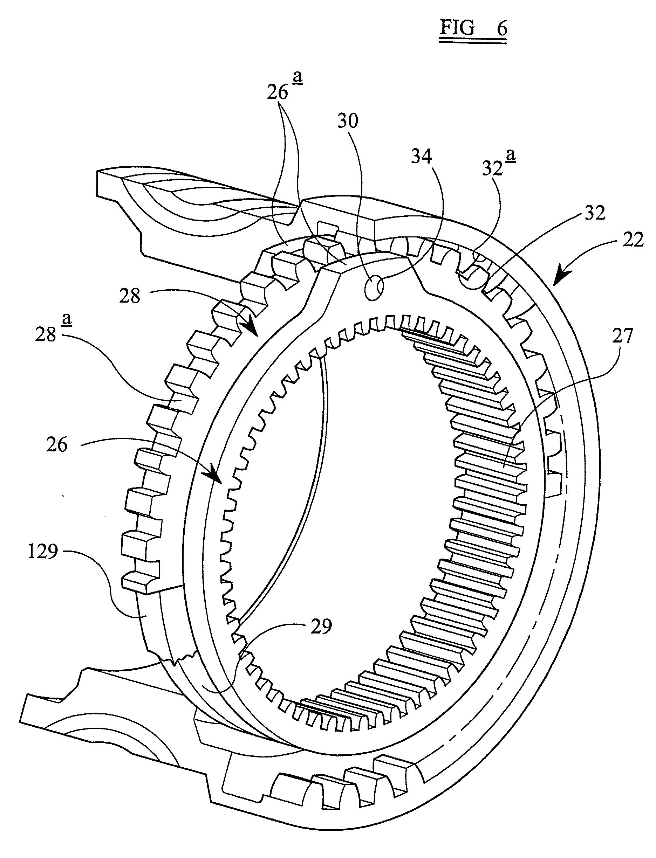

In the modification illustrated in Figures 5 and 6 there are structural alterations although the principle of operation is substantially identical to that described above with reference to Figures 1 to 4. It can be seen from Figure 6 that the axial position of the intermediate drive arrangement 23 has been moved to be adjacent the second brake arrangement 41 rather than the first brake arrangement 40. This change is primarily for convenience of manufacture.
The first brake arrangement 40 has been replaced by a duplex "no-back" device of the kind described in our co-pending British patent application 0215727. Again the detail of the "no-back" device is not of importance to an understanding of the present invention.

As is apparent from Figure 6 the structure of the annular drive ring 26 is substantially unchanged, the annular drive ring 26 having an external circumferential groove 29 which passes through a radially outwardly extending lug 26a to divide the lug 26a into parallel spaced regions. The lug regions 26a have aligned apertures 34 for receiving a shear pin 30, and the interior of the drive ring 26 is splined at 27 to provide a drive connection with the input shaft 16 whereby the drive ring 26 will rotate with the shaft 16, but can move axially thereon as permitted by the axial splines 27.

The carrier member 28 has been modified by comparison with the carrier member 28 of Figure 1 in that in place of the radial flanges 28a received in axial recesses 55 of the drive shaft 22, the interior of the enlarged region 32 of the drive shaft 22 is axially splined at 32a to receive mating axial splines 28a on the external peripheral surface of the semi-circular carrier member 28. The splined connection 28a, 32a between the carrier member 28 and the drive shaft 22 serves the same function as the radial flanges 28a and axial recesses 55 of the arrangement illustrated in Figure 1.

In order to accommodate the flanges 28a the external diameter of the carrier member 28 is increased so that there is no equivalent of the radially extending lug 128a of Figure 1. Instead, the carrier member 28 is simply provided with an aperture 34 which, in the position of the components illustrated in Figure 6, is aligned with the apertures 34 of the lug regions 26a, and receives the shear pin 30 which passes through the carrier member to be received, at its opposite axial ends, in the lug regions 26a of the drive ring 26.

It will be recognised that as the groove 29 is a completely circumferential groove in the annular drive ring 26, whereas the carrier member 28 is semi-circular, then in the arrangement illustrated in Figures 1 to 4 the carrier member 28 occupies only half of the circumference of the groove 29, the remainder of the groove 29 being open. A possible problem which it is contemplated could occur with the arrangement illustrated in Figures 1 to 4 is that, after shearing of the pin 30, as the carrier member 28 moves angularly, around the groove 29 there are periods during which no part of the carrier member 28 lies between the lug regions 26a. During such periods, as a result of vibration, is it possible that one or other of the sheared end regions of the shear pin 30 could migrate axially to lie partly within the gap between the lug regions 26a and so abut one or other end surface of the carrier 28 as the carrier 28 and drive ring 26 undergo relative rotation. Clearly such abutment of an end surface of the carrier member 28 with an inwardly protruding part of the shear pin 30 would reestablish a driving connection between the carrier member 28 and the drive ring 26 at a point in time when there should be no drive connection as a result of earlier shear of the pin 30.

In order to prevent this remote possibility occurring the part of the groove 29 not occupied by the carrier member 28 is occupied, in the embodiment shown in Figures 5 and 6, by a semi-circular blocking ring 129, the blocking ring 129 having its opposite ends abutting the ends of the carrier member 28 and having an external radius greater than the radial spacing of the pin 30 from the longitudinal axis of the actuator, but no greater than the root radius of the splines 28a. The blocking member 129 which will move in the groove 29 with the carrier member 28 will block inadvertent axial movement of the sheared end regions of the shear pin 30 into the space between the lug regions 26a of the drive ring 26, but will not interfere with the splines 32a on the interior of the drive shaft 22. It will be appreciated that if desired a similar blocking ring could be incorporated in the construction illustrated in Figures 1 to 4.

Throughout the service life of the actuator, the braking surfaces 52, 53 of the first brake arrangement 40 will become worn, thus allowing a small amount of relative axial movement between the ratchet wheel 44 and the input shaft 16. In conventional actuators of this type, in which the drive shaft 22 is coupled directly to the input shaft 16 through a shear pin, the shear gap across which the shear pin is sheared in the event that the load applied by the drive shaft exceeds a maximum, predetermined amount is caused to increase. It has been found that this leads to a tendency for the shear pin to bend or deform in the shear gap and not to fracture in a clean break, as is required for satisfactory operation. This can result in the shear pin becoming wedged across the shear gap such that it is prevented from shearing in the event of excessive drive loads. In such circumstances, the drive will not be disconnected and damage to the flight control surface may occur. In the present invention, as the drive imparted by the drive shaft 22 to the input shaft 16 passes through an intermediate drive arrangement 23, it is possible to mount the shear pin 30 such that even if wear occurs between the braking surfaces 52, 53 of the first brake arrangement 40 the shear gap remains substantially constant. Thus, the risk of the shear pin 30 becoming wedged is substantially eliminated.

## Claims

1. A ball screw actuator for moving an aircraft control surface, the actuator comprising a rotatable input shaft (16) which is driven, in use, by a drive shaft (22) and which is coupled through a ball screw coupling (18, 20) to a non-rotatably mounted output shaft (10) and **characterised in that**, the drive shaft (22) is arranged to impart a drive load to the input shaft (16) through an intermediate drive arrangement (23) including a carrier member (28) and a shear pin (30) which is coupled to the carrier member (28) and arranged to shear across a shear gap in the event that the drive load applied by the drive shaft (22) exceeds a predetermined value, thereby to break the drive connection between the drive shaft (22) and the input shaft (16).

2. An actuator as claimed in Claim 1, **characterised in that** said intermediate drive arrangement (23) is such that the shear gap remains substantially constant throughout the actuator service life.

3. An actuator as claimed in Claim 1 or Claim 2, **characterised in that** the intermediate drive arrangement (23) further comprises an intermediate drive member (26) in driving connection with the input shaft (16), wherein the shear pin (30) extends between respective recesses provided in the intermediate drive member (26) and the carrier member (28) to provide a drive load path from the drive shaft (22) to the input shaft (16).

4. An actuator as claimed in Claim 3, **characterised in that** the intermediate drive member (26) is in the form of an annular drive ring.

5. An actuator as claimed in Claim 4, **characterised in that** the carrier member (28) is received within a circumferential groove (29) provided in the intermediate drive member (26).

6. An actuator as claimed in Claim 5, **characterised in that** the shear gap is defined between a radial surface of the circumferential groove (29) provided in the intermediate drive member (26) and a radial surface of the carrier member (28).

7. An actuator as claimed in Claim 5 or Claim 6, **characterised in that** a blocking member (12a) occupies that region of the circumferential groove (29) of the intermediate drive member (26) not occupied by said carrier member (28).

8. An actuator as claimed in any one of the preceding claims **characterised in that** said carrier member (28) is coupled to said drive shaft (22) to be driven rotationally thereby, through an axial spline connection (28a, 32a).

9. An actuator as claimed in any of the preceding claims, **characterised by** further comprising a first brake arrangement (40) which is arranged to apply a braking load to the input shaft (16) in response to an external axial compressive load being applied to the actuator.

10. An actuator as claimed in any one of the preceding claims, further **characterised by** comprising a second brake arrangement (41) which is arranged to apply a braking load to the input shaft (16) in response to an external axial tensile load being applied to the actuator.
